# EUROPÄISCHE PATENTSCHRIFT

(11) **EP 4 107 354 B1**
(45) Veröffentlichungstag und Bekanntmachung des Hinweises auf die Patenterteilung: **03.09.2025**
(21) Anmeldenummer: 21718059.5
(22) Anmeldetag: 06.04.2021
(51) Int. Cl.: E06B 3/263

(54) **VERBUNDPROFIL**
COMPOSITE PROFILE
PROFILÉ COMPOSITE

(30) Priorität: 03.04.2020 CH 4052020
(43) Veröffentlichungstag der Anmeldung: 28.12.2022
(73) Patentinhaber: Hochuli Advanced AG, 8556 Wigoltingen (CH); EMPA Eidgenössische Materialprüfungs- und Forschungsanstalt, 8600 Dübendorf (CH)
(72) Erfinder: HOCHULI, Frank, 8556 Wigoltingen (CH); ANGEHRN, Paulruedi, 8405 Winterthur (CH); BARBEZAT, Michel Yves, 8487 Zell (CH); MICHEL, Silvain Arséne, 8057 Zürich (CH)
(74) Vertreter: Swisspat Riederer Hasler Patentanwälte AG
(86) Internationale Anmeldenummer: PCT/EP2021/058872
(87) Internationale Veröffentlichungsnummer: WO 2021/198529

(56) Entgegenhaltungen:
- DE-A1- 3 227 509
- DE-U1- 202018 006 104
- FR-A1- 2 971 808

## Beschreibung

### TECHNISCHES GEBIET DER ERFINDUNG

Die Erfindung betrifft ein Verbundprofil gemäss Oberbegriff des Anspruchs 1 und ein Rahmen- oder Fensterprofil gemäss Oberbegriff des unabhängigen Anspruchs 14. Die Erfindung betrifft auch ein Verfahren zur Herstellung eines Verbundprofils gemäss Oberbegriff des unabhängigen Anspruchs 18.

### HINTERGRUND DER ERFINDUNG

Verbundprofile werden vermehrt in verschiedensten Anwendungen eingesetzt und müssen aufgrund dessen unterschiedlichen Beanspruchungen standhalten können. Beim Verbundprofil wird versucht, durch gezielten Einsatz von mindestens zwei unterschiedlichen Materialien optimale Verwendung ihrer Materialeigenschaften zu erzielen. Eine Herausforderung für die Festigkeit von Verbundprofilen stellen die Übergänge zwischen den Materialien dar. Die Verbindung zwischen den Materialien in einem Verbundprofil bildet einen Schwachpunkt bei Beanspruchung des Verbundprofils. Das Versagen des Verbundprofils wird erwartungsgemäss an einer Verbindungsfläche zwischen zwei Materialien stattfinden. Aus diesem Grund führt die Verstärkung der Verbindung der Materialien untereinander in einem Verbundprofil zur Erhöhung der Festigkeit des gesamten Verbundprofils.

In den modernen Bauten werden an die thermischen und akustischen Isolationseigenschaften der Wände hohe Anforderungen gestellt. In einer Wand bilden die Fenster und Türen den Zugang von der Innenseite der Wand nach aussen. Aus diesem Grund können die Fenster und Türen für den Wärmedurchgang der gesamten Wand einen Schwachpunkt darstellen und stehen infolge dessen bei der Verbesserung der Isolationseigenschaft besonders im Augenmerk. Nebst einer hohen Wärmedämmung wird auch eine hohe Schalldämmung von Fenster- und Türflügeln gefordert.

Für die Wärmedämmung hat sich das Anbringen von Isolierstegen im Rahmen der Fenster- und Türflügel bewährt. Die Isolierstege bilden die Verbindung zwischen einer Aussen- und Innenschale eines Fenster- oder Türflügels, welche wiederum zusammen den Rahmen des Fensters oder der Türe bilden.

In DE 20 2018 006 104 U1 ist ein Profil aus einem Substratgrundkörper und einer auf einem Oberflächenbereich des Substratgrundkörpers aufgebrachten Beschichtung gezeigt. Der Substratgrundkörper ist unter Verwendung eines ersten Polymermaterials gefertigt, wobei die Beschichtung ein zweites Matrixpolymer umfasst, welches mit dem ersten Polymer kompatibel ist. Der Substratgrundkörper kann durch ein extrudiertes Isolierprofil gebildet sein. Die Beschichtung auf dem Substrat weist bevorzugt eine mittlere beobachtbare Dicke von ca. 100 µm oder weniger auf. Die Beschichtung des Substratgrundkörpers ermöglicht eine perfekte Lackabdeckung, das heisst ein homogener, deckender Pulverauftrag. Für die Herstellung des Profils wird ein Lösemittel passend zum Matrixpolymer und zum ersten Polymer des Substratgrundkörpers gewählt. Das Lösemittel kann dabei ein flüssiger chemischer Reinstoff oder eine Mischung solcher Reinstoffe sein.

In FR 2 971 808 ist ein Wärmedämmprofil bestehend aus zwei thermoplastischen Polymeren gezeigt. Ein erstes Polymer bildet einen porösen Kern und ein zweites Polymer die Umhüllung des Kerns. An den Längsseiten sind schwalbenschwanzförmige Vorsprünge vorgesehen, wobei diese durch das erste Polymer gebildet sind und somit ein Teil des Kerns bilden. Der Kern und die Umhüllung sind bevorzugt aus Polyvinylchlorid (PVC) realisiert. Das Wärmedämmprofil ist vorgesehen in einem Koextrusions-Verfahren hergestellt zu werden, wobei dabei das den Kern bildende Polymer in die Umhüllung ausgespritzt wird und diese anschliessend füllt.

In WO2015189348 ist ein Abstandhalterprofil aus einem Kunststoffmaterial offenbart, welches durch Zugabe von Additiven oder Füllstoffen zu einem Verbundprofil ausgebildet werden kann. Die Additive oder Füllstoffe umfassen dabei unter anderem unterschiedliche Fasern wie zum Beispiel Glasfasern. Das Abstandhalterprofil kann als Duroplast oder Thermoplast zum Einsatz kommen. Des Weiteren ist offenbart, dass Kunststoff-Abstandprofile aus Polyamid mit einem Glas-Faseranteil von 10% bis 40% mittels Extrusion gefertigt sein können. In einer bevorzugten Ausführung kann das offenbarte Abstandhalterprofil ein strangförmiges Isoliermaterial aufnehmen. In einer weiteren Ausführung ist die Aufnahme von Schaummassen in dafür vorgesehene Bereiche des Abstandprofils vorgeschlagen, wobei die Schaummassen formbündig im Abstandprofil angebracht werden. Die Schaummassen dienen der Verbesserung der mechanischen Festigkeit und der Wärmedämmung des Abstandhalterprofils.

Aus EP 2 666 949 ist ein weiterer Isoliersteg als Verbundprofil bekannt. Dieser ist als ein geschäumter, feinporiger Kunststoffkörper ausgebildet, welcher auf zwei gegenüberliegenden Seiten von Kunststoffprofilen aufgenommen wird. Diese Kunststoffprofile gehen wiederum eine formschlüssige Verbindung mit der Aussen- bzw. Innenschale des Flügel-Rahmens ein.

Ein grosser Temperaturunterschied zwischen der Aussenseite und der Innenseite eines Tür- oder Fensterflügels führt zu einem grossen Temperaturunterschied zwischen der Innenschale und der Aussenschale des Flügel-Rahmens. In den Isolierstegen, welche die Verbindung zwischen der Innenschale und Aussenschale bilden, sorgt die Temperaturdifferenz auf deren zwei Seiten für grosse Zug- und Schubspannungen innerhalb des Bauteils.

Wie bereits oben beschrieben, stellen Spannungen in einem Verbundprofil eine grosse Herausforderung für die Verbindungslinie der unterschiedlichen Materialien dar, wie im Fall von der WO2015189348 zwischen dem Kunststoff-Profil und der Schaummasse oder im Fall von der EP 2 666 949 zwischen dem Kunststoffprofil und dem Kunststoffkörper. Die Verbindungslinie zwischen den zwei Materialien bildet eine Schwachstelle gegenüber Schubspannungen, so dass ein Versagen eines auf Schub beanspruchten Verbundprofils am wahrscheinlichsten an der Verbindungslinie von zwei Materialien eintritt oder an der Verbindungsstelle mit den Profilschalen.

DE 32 27 509 A1 offenbart ein Verbundprofil mit einem Isoliersteg aus Kunststoff. Die Isolierstege ragen mit ihren im Querschnitt schwalbenschwanzförmig ausgebildeten Enden in entsprechend ausgebildete, längsverlaufende Nuten der Verbundprofileteile hinein. Der Isoliersteg besteht zumindest teilweise aus geschäumtem Kunststoff mit poröser oder zelliger Struktur. Geeignete, geschäumte Kunststoffe sind Polyamid, insbesondere Polyamid 6.6 oder Polyäthylen-Terephthalat. Der geschäumte Kunststoff kann durch Glasfasern verstärkt sein. In einer Ausführungsform weist der Isoliersteg einen aus geschäumtem Kunststoff bestehenden Innenkern auf, der von einem Mantel aus ungeschäumtem Kunststoff, beispielsweise Polyamid oder Polyäthylen-Terephthalat, umgeben ist. Ein solcher Steg lässt sich beispielsweise durch Koextrusion von Innenkern und Mantel herstellen. Der Mantel genügt insbesondere den Anforderungen an die chemische und physikalische Beständigkeit, beispielsweise beim Eloxieren oder Heisslackieren des Verbundprofils.

### AUFGABE

Das Ziel des Erfindungsgegenstandes ist ein Verbundprofil vorzugschlagen, welches eine höhere Festigkeit als die handelsüblichen Verbundprofile aus dem Stand der Technik aufweist.

Des Weiteren ist es ein Ziel, ein Rahmen oder Flügelprofil mit einem erfindungsgemässen Verbundprofil für Fenster oder Türen vorzuschlagen, welches verbesserte Isolationseigenschaften aufweist.

### BESCHREIBUNG

Erfüllt wird diese Aufgabe durch ein Verbundprofil gemäss Anspruch 1.

Die Erfindung bezieht sich auf ein Verbundprofil mit einem geschäumten Kern aus einem ersten Kunststoff und einer den Kern umfassenden Umhüllung aus einem zweiten Kunststoff, die den Kern formschlüssig umhüllt. Der erste und der zweite Kunststoff sind miteinander kompatibel, so dass sie eine stoffschlüssige Verbindung miteinander eingehen. Aufgrund der vollständigen Umhüllung des ersten Kunststoffs durch den zweiten Kunststoff kann das Verbundprofil grössere Kräfte aufnehmen. Die Belastbarkeit des Verbundprofils kann weiter erhöht werden, wenn eine stoffschlüssige Verbindung zwischen den beiden Kunststoffen zustande kommt. Beim Verbundprofil handelt es sich um ein längliches Profil, bei welchem seine Länge ein Vielfaches, insbesondere mehr als das fünffache und vorzugsweise zehnfache seiner Breite oder Dicke beträgt.

Die Aufteilung des Verbundprofils in einen Kern und eine den Kern umhüllende Schicht ermöglicht den Einsatz von unterschiedlichen Materialien in diesen zwei Bereichen, wobei die Auswahl des Materials aufgrund der in den jeweiligen Bereichen zu erwartenden Belastungen ausgewählt werden kann. Die den Kern umhüllende Schicht aus einem zweiten Kunststoff kann als eine Verstärkung der Steifigkeit des Verbundprofils angesehen werden. Durch das Anbringen der Schicht um den Kern kann diese die Zug-, Druck- und Torsionskräfte, welche bei Biegung oder Torsion des Verbundprofils entstehen, aufnehmen. Aus diesem Grund wird ein Werkstoff als zweiter Kunststoff vorgeschlagen, welcher gute Eigenschaften für die Aufnahme von vor allem Zug- aber auch Druckkräften aufweist. Das gezielte Einsetzen der Materialeigenschaften in den zwei Bereichen des Verbundprofils führt zu einem optimalen Gebrauch der Ressourcen.

Die stoffschlüssige Verbindung wird dadurch erreicht, dass die beiden Kunststoffe der gleichen Kunststoff-Familie angehören und somit miteinander kompatibel sind. Diese Eigenschaft ermöglicht unter Einhaltung von bestimmten Prozessparametern das Eingehen einer Verschweissung beider Kunststoffe.

Die stoffschlüssige Verbindung zwischen dem ersten und dem zweiten Kunststoff bringt den Vorteil mit sich, dass kein zusätzlicher Klebestoff benötigt wird, um eine feste Verbindung zwischen dem ersten und dem zweiten Kunststoff herzustellen.

Der geschäumte Kern ist durch ein poröses Material gebildet. Die Porosität ist als das Verhältnis des gesamten Hohlraum-Volumens zum Gesamtvolumen definiert. Bevorzugt weist der geschäumte Kern eine Porosität zwischen 0.6 und 0.95 auf.

Das Verbundprofil kann auch als eine sogenannte Sandwich-Struktur aus drei Schichten bezeichnet werden, wobei der erste Kunststoff die Schicht in der Mitte und der zweite Kunststoff die restlichen zwei Schichten bilden. Dabei ist wichtig zu erwähnen, dass im erfindungsgemässen Verbundprofil der zweite Kunststoff den ersten Kunststoff umhüllt.

Die im Folgenden angeführten vorteilhaften Ausführungsvarianten führen allein oder in Kombination miteinander zu weiteren Verbesserungen des Verbundprofils.

Vorzugsweise ist an gegenüberliegenden Seiten des Verbundprofils stirnseitig eine Anformung vorgesehen, um eine form-, kraft- und/oder stoffschlüssige Verbindung, vorzugsweise eine formschlüssige Verbindung, mit anderen Teilen einzugehen. Die Anformung kann sowohl zum Anbringen des Verbundprofils an einem bestehenden Bauteil oder zur Aufnahme eines weiteren Bauteils durch das Verbundprofil dienen. Die form- und kraftschlüssige Verbindung ermöglicht im Gegensatz zur stoffschlüssigen Verbindung das Verbundprofil lediglich durch Aufbringen einer Kraft vom anderen Teil zu lösen und gegebenenfalls wieder zu verbinden.

In einer bevorzugten Ausführungsform sind die Anformungen an den Längsseiten des Verbundprofils angeordnet. Da die Anformungen zum Eingehen einer Verbindung mit einem anderen Bauteil dienen, sorgt das Anbringen der Anformung an der Längsseite des Verbundprofils für die längstmögliche Verbindungslinie und zugleich für die grösstmögliche Verbindungsfläche zwischen dem Verbundprofil und dem mit ihm verbundenen Bauteil. Die dadurch entstehende grösstmögliche Verbindungsfläche ermöglicht den Druck an dieser Fläche, welcher durch die Übertragung der Kraft vom Verbundprofil auf das andere Bauteil oder in umgekehrter Richtung entsteht, zu minimieren.

In einer weiteren bevorzugten Ausführungsform ist an gegenüberliegenden Seiten des Verbundprofils eine Anformung in Gestalt eines schwalbenschwanzförmigen Fortsatzes, einer Einkerbung oder dergleichen aus dem zweiten Kunststoff vorgesehen. Der schwalbenschwanzförmige Fortsatz bildet eine ideale Form für eine formschlüssige Verbindung. Der schwalbenschwanzförmige Fortsatz kann durch Anbringen von zwei Einkerbung auf gegenüberliegenden Seiten erstellt werden. Vorzugsweise wird die Anformung am Verbundprofil durch den zweiten Kunststoff gebildet. Aufgrund der Verwendung des zweiten Kunststoffes für die Ausgestaltung der Anformungen braucht sich der Kern nicht einer Umformung zu unterziehen.

Der zweite Kunststoff umhüllt vorzugsweise die Mantelfläche des geschäumten Kerns. Die Mantelfläche wird durch die grössten Seiten des Kerns gebildet, so dass die zwei kleinsten Seiten des Kerns ausgeschlossen sind. Bei einem quaderförmigen Aufbau des Kerns bilden die vier grössten Seitenflächen dessen Mantelfläche. Durch die Umhüllung der Mantelfläche des Kerns wird die grösstmögliche Fläche des Kerns umhüllt.

In einer weiteren bevorzugten Ausführungsform weist das Verbundprofil eine Dicke von maximal 40 mm, vorzugsweise von 25 mm auf. Die Dicke hat einen direkt proportionalen Einfluss auf das Volumen des Verbundprofils und somit auch auf die Menge des zu verwendenden Materials bei der Herstellung. Die Reduktion der Materialmenge wirkt sich direkt auf die Herstellungskosten aus. Zugleich hat die Dicke einen Einfluss auf den Wärmestrom, welcher sich einstellt, wenn das Verbundprofil an seinen zwei gegenüberliegenden Längsseiten unterschiedlichen Temperaturen ausgesetzt ist. Das Verbundprofil kann unter anderem zur Wärmedämmung vorgesehen sein. Um diese Aufgabe erfüllen zu können, muss es eine möglichst kleine Wärmeleitfähigkeit aufweisen, was einerseits mit der Auswahl von geeigneten Materialien und andererseits mit der Querschnittsflächengrösse des ausgewählten Materials geschieht. Die über das Verbundprofil transportierte Wärme, beziehungsweise der Wärmestrom, ist vom Produkt der Wärmeleitfähigkeit und der Querschnittsfläche des Verbundprofils senkrecht zur Verbindunglinie zwischen den zwei unterschiedlichen Temperaturregionen abhängig. Das heisst, dass der Wärmestrom über das Verbundprofil nebst seiner Wärmeleitfähigkeit auch von seiner Dicke abhängt. Je kleiner die Wärmeleitfähigkeit der verwendeten Materialien und die Dicke des Verbundprofils ist, umso geringer fällt der sich über das Verbundprofil einstellende Wärmestrom aus. Somit kommt die Reduktion der Dicke des Verbundprofils der Wärmedämmung zugute. Bei Verwendung von zwei unterschiedlichen Materialien wie im erfindungsgemässen Verbundprofil ist die Aufteilung des Wärmestroms zwischen den Materialien von deren Wärmeleitfähigkeit abhängig. Da der geschäumte Kern aufgrund seiner Porosität eine grosse Wärmedämmung aufweist, ist die Wärme gewillt den Weg des geringsten Widerstands zu folgen und über den zweiten Kunststoff zu fliessen. Aus diesem Grund hat nebst der Reduktion der Gesamtdicke des Verbundprofils die Reduktion der Schichtdicke des zweiten Kunststoffs einen erheblichen Einfluss auf die Vergrösserung der Wärmedämmung des ganzen Verbundprofils. Vorzugsweise ist der zweite Kunststoff mit Kurzfasern, vorzugsweise Glaskurzfasern, versetzt, die eine typische Länge zwischen ca. 1 und 5 mm haben . Fasern dienen in einem Verbundwerkstoff vor allem für die Aufnahme von Zugkräften. Durch die Verwendung von Glaskurzfasern im Kunststoff erhöht sich die Festigkeit und Steifigkeit des Kunststoffes und ermöglicht ihm, höheren Biege- und Zugbelastungen Stand zu halten.

Vorteilhafterweise beträgt der Anteil an Glaskurzfasern im zweiten Kunststoff 10% bis 40%, vorzugsweise 20% bis 30%. Die Prozentangaben beziehen sich auf die Masse des Kunststoffes und der Glaskurzfasern. Der Anteil von Glaskurzfasern von 10% bis 40% stellt jenen Bereich dar, welcher eine erhebliche Erhöhung der Festigkeit des Kunststoffes bewirkt und eine vergleichsweise günstige Herstellung des mit Glaskurzfasern versetzten Kunststoffes aufweist. Der Bereich von 20% bis 30% Glaskurzfasern im zweiten Kunststoff führt zu einem noch besseren Kompromiss zwischen der erreichten Festigkeit des Kunststoffes und dem Aufwand für dessen Herstellung.

In einer weiteren bevorzugten Ausführung weist der erste Kunststoff eine Dichte von 120 bis 450 kg/m3, vorzugsweise von 150 bis 350 kg/m3 und noch bevorzugter von 170 bis 300 kg /m3 auf. Der erste Kunststoff bildet wie oben beschrieben den geschäumten Kern des Verbundprofils. Aufgrund seines porösen Aufbaus weist der erste Kunststoff eine im Vergleich zum zweiten Kunststoff kleinere Dichte auf. Der Kern hat dank seiner geringen Dichte eine kleine Masse, eignet sich aber zugleich ideal für die Aufnahme von Druck- und Schubkräften.

Vorzugsweise umfasst der erste Kunststoff PET. Die Verwendung von PET als Material für den ersten Kunststoff bietet etliche Vorteile. PET wird als Material in verschiedenen Industrien seit Jahrzehnten ohne negative Erfahrungen eingesetzt. Gegenüber Metallen weist PET den Vorteil auf, dass PET als Kunststoff nicht korrodiert, was für den Unterhalt der aus diesem Material hergestellten Produkte eine grosse Erleichterung bedeutet. Da es sich bei PET um ein recyclebares Material handelt, besitzt dessen Herstellung auch eine bessere Ökobilanz alsandere Materialien. Darüber hinaus kann die Verarbeitung von PET mit konventionellen Aluminium- oder Holzbearbeitungswerkzeugen vorgenommen werden und bedarf keiner zusätzlichen Schutzmassnahme. Schrauben, welche in einem Schaumkern aus PET befestigt werden, erreichen eine unerwartet hohe Ausziehkraft. PET wird in Konstruktionen auch unter anderem dank seiner brandhemmenden Funktion bevorzugt. Im Vergleich zu anderen oft eingesetzten Kunststoffen weist PET, insbesondere wenn er kristallisiert vorliegt, eine hohe Temperaturbeständigkeit auf.

Vorzugsweise umfasst der zweite Kunststoff PET oder PBT. Sowohl PET als auch PBT ist ein thermoplastischer Kunststoff. Die oben erwähnten positiven Eigenschaften des PET lassen sich hier wiederholen und auch auf PBT erweitern, da dieser eine sehr ähnliche chemischer Struktur wie PET aufweist und dadurch zur gleichen Polyester-Familie gehört. Im Vergleich zu anderen oft eingesetzten Kunststoffen, wie zum Beispiel PVC, weisen PET und PBT eine höhere Temperaturbeständigkeit auf.

In einer weiteren bevorzugten Ausführungsform beträgt die Breite des Verbundprofils mindestens ein Vierfaches, vorzugsweise mindestens ein Sechsfaches der Dicke des Verbundprofils. In einer solchen Ausführung bildet das Verbundprofil ein flaches Bauteil bzw. einen flachen Balken. Aufgrund der Verwendung eines Verbunds von auserwählten Materialien kann die Dicke des Verbundprofils reduziert werden. Dies wiederum führt zu einem kompakteren und platzsparenden Aufbau des Verbundprofils.

In einer weiteren bevorzugten Ausführungsform weist der geschäumte Kern einen Querschnitt in Form eines flachen Rechtecks und der zweite Kunststoff auf den Flachseiten des Kerns eine Dicke zwischen 0.1 mm und 5 mm, vorzugsweise zwischen 0.1 mm und 3 mm und besonders bevorzugt zwischen 0.1 mm bis 2 mm und noch bevorzugter zwischen 0.1 mm und 1 mm, auf. Eine dünne Schicht des zweiten Kunststoffes hilft die Dicke des gesamten Verbundprofils auf einem Minimum zu halten. Auch wenn die Herstellung einer solchen dünnen Schicht eine Herausforderung darstellt, bietet sie den Vorteil des geringeren Gewichts und des kleineren Volumens. Insbesondere die dünne Schicht des zweiten Kunststoffs hilft die Wärmedämmung des Verbundprofils zu erhöhen.

Gegenstand der vorliegenden Erfindung ist auch ein Rahmenprofil oder Flügelprofil für Fenster oder Türen mit einem erfindungsgemässen Verbundprofil. Das erfindungsgemässe Verbundprofil bietet sich aufgrund seiner hohen Wärme- und Schalldämmung für den Einsatz in einem Rahmen- oder Flügelprofil an. Das Verbundprofil dient zwischen dem Innenraum und der Aussenwelt als zusätzliche Barriere sowohl für die Wärme als auch für den Schall.

Vorzugsweise ist das Verbundprofil zwischen einer Aussenschale und einer Innenschale des Fensters oder der Türe angeordnet. In dieser Konfiguration kommen die vorteilhaften Eigenschaften des erfindungsgemässen Verbundprofils besonders gut zur Geltung. Idealerweise bilden die Verbundprofile die einzige Verbindung zwischen der Innen- und der Aussenschale. Dadurch muss die Wärme von der Innenschale zur Aussenschale oder umgekehrt stets über das Verbundprofil fliessen. Die Wärmedämmungs-Eigenschaften des Verbundprofils bestimmen direkt diejenigen des gesamten Rahmens oder Flügels. Die formschlüssige Verbindung bietet die Möglichkeit einer einfach lösbaren aber stabilen Verbindung zwischen dem Verbundprofil und der Innen- oder Aussenschale.

In einer weiteren bevorzugten Ausführungsform gehen die Anformungen im Verbundprofil eine formschlüssige Verbindung mit der Aussen- und Innenschale des Fensters oder der Türe ein. Die an beiden Enden des Verbundprofils angebrachten Anformungen bestimmen die Breite des Verbundprofils als die Distanz zwischen der Innen- und der Aussenschale. Dies ermöglicht zugleich die Verwendung der ganzen Breite des Verbundprofils.

Gegenstand der vorliegenden Erfindung ist auch ein Verfahren zur Herstellung eines Verbundprofils, bei welchem ein Kern durch ein PET-Hartschaum gebildet wird und dieser durch einen Kunststoff aus faserverstärktem PET oder PBT umspritzt wird, wobei das Umspritzen des Kerns durch den faserverstärkten Kunststoff in einem Extrusions-Verfahren durchgeführt wird.

Das Extrusions-Verfahren weist den Vorteil auf, dass die Herstellungszeit sich gegenüber den heute gängigen Verfahren um ein Vielfaches verkürzt und dadurch eine grössere Menge an Verbundprofilen innerhalb der gleichen Zeit hergestellt werden kann.

Vorteilhafterweise kommt beim Umspritzen des Kerns durch den faserverstärkten Kunststoff eine stoffschlüssige Verbindung zwischen diesen Kunststoffen zustande. Die stoffschlüssige Verbindung sorgt wie bereits oben geschildert für eine stärkere Verbindung zwischen den Kunststoffen und führt zugleich zu einem höheren Widerstand des gesamten Verbundprofils gegenüber Belastungen.

Vorzugsweise wird das Verbundprofil nach dessen Herstellung eloxiert, pulverlackiert oder nasslackiert. Die Herstellung des Verbundprofils aus zwei Thermoplasten wie PET und/oder PBT in einem Extrusions-Verfahren ermöglicht eine grosse Bandbreite an Weiterverarbeitungsmöglichkeiten. Aufgrund der Weiterverarbeitung des Verbundprofils kann dessen Beständigkeit und/oder Festigkeit zunehmen.

Die Nachbehandlung des Verbundprofils wie das Lackieren wird unter anderem durch die Oberfläche, welche sich aufgrund der Umhüllung aus PET oder PBT ergibt, ermöglicht.

Genannte optionale Merkmale können in beliebiger Kombination verwirklicht werden, soweit sie sich nicht gegenseitig ausschliessen. Insbesondere dort wo bevorzugte Bereiche angegeben sind, ergeben sich weitere bevorzugte Bereiche aus Kombinationen der in den Bereichen genannten Minima und Maxima.

### KURZBESCHREIBUNG DER FIGUREN

Weitere bevorzugte Ausführungen der Erfindung ergeben sich aus der nun folgenden Beschreibung anhand der Figuren. Es zeigen in nicht massstabsgetreuer, schematischer Darstellung:
- Figur 1:: ein Schnittbild eines Isoliersteges in einem Rahmenprofil eines Fensterflügels nach dem Stand der Technik;
- Figur 2:: ein Schnittbild eines erfindungsgemässen Verbundprofils als Isoliersteg angeordnet im Rahmenprofil aus Figur 1;
- Figur 3:: ein Schnittbild eines erfindungsgemässen Verbundprofils mit seitlich versetzten Anformungen angeordnet im Rahmenprofil aus Figur 1;
- Figur 4:: ein Schnittbild eines erfindungsgemässen Verbundprofils mit zusätzlichen Querbalken angeordnet im Rahmenprofil aus Figur 1;
- Figur 5:: ein Schnittbild eines erfindungsgemässen Verbundprofils mit einer grösseren Profildicke angeordnet im Rahmenprofil aus Figur 1;
- Figur 6:: ein Querschnitt eines Doppel-T-Trägers als Verbundprofil;
- Figur 7:: ein Querschnitt eines Doppel-T-Träger als Verbundprofil mit unterschiedlicher Dicke der Kunststoff-Schicht;
- Figur 8:: ein Querschnitt eines rechteckigen Verbundprofils mit abgerundeten Kanten;
- Figur 9:: ein Querschnitt eines runden Verbundprofils;
- Figur 10:: ein Querschnitt eines Verbundprofils mit zwei in die gleiche Richtung gekrümmten Flächen;
- Figur 11:: ein Querschnitt eines Verbundprofils wie in Figur 10, mit jedoch einem nur zweikantigen Kern.

### DETAILIERTE BESCHREIBUNG DER FIGUREN

Im Folgenden stehen gleiche Bezugsziffern für gleiche oder funktionsgleiche Elemente (in unterschiedlichen Figuren). Ein zusätzlicher Apostroph kann zur Unterscheidung gleichartiger bzw. funktionsgleicher oder funktionsähnlicher Elemente in einer weiteren Ausführung dienen.

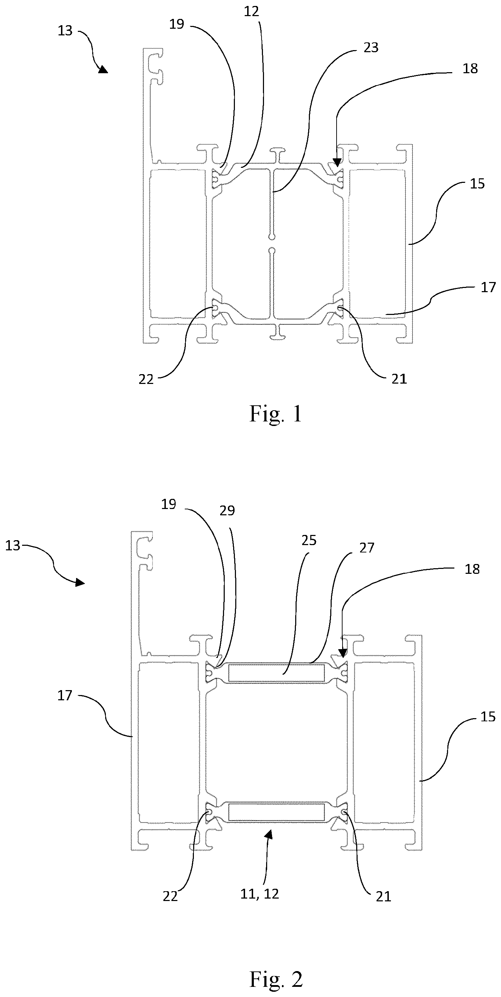

In Figur 1 ist ein Rahmenprofil 13 eines Fensterflügels nach heutigem Stand der Technik gezeigt. Das Rahmenprofil 13 besteht aus einer Innenschale 15, einer Aussenschale 17 und zwei Isolierstegen 12. Die Isolierstege 12 stellen die Verbindung zwischen der Innenschale 15 und der Aussenschale 17 her. Der Querschnitt der Innenschale 15 und der Aussenschale 17 wird durch ein Rechteck gebildet. Die beiden Schalen sind derart zueinander angeordnet, dass ihre Längsseiten parallel gerichtet sind und ihre Breiten auf der gleichen Höhe zu liegen kommen. Die Innenschale 15 als auch die Aussenschale 17 sind als eine Leichtbaukonstruktion ausgeführt, indem stranggepresste Profile eingesetzt werden. An den Ecken der rechteckförmigen Querschnitte sind Vorsprünge unterschiedlicher Form angebracht, mit deren Hilfe der Rahmen entweder weitere Bauteile aufnehmen oder an einem anderen Bauteil angebracht werden kann. Die Aussenschale weist auf ihrer der Inneschale abgeneigten Seite eine Verlängerung der Längsseite auf. Die Verlängerung dieser Seite ragt über den Eckpunkt des den Querschnitt bildenden Rechtecks hinaus, wobei die rechteckige Form des Querschnitts weiterhin gegeben ist. Sowohl an der Innenschale 15 als auch an der Aussenschale 17 sind an den gegenseitig zugewandten Seiten zwei Paare an Auswölbungen 19 vorgesehen, welche jeweils eine Nut 21,22 bilden. Die Nuten 21,22 auf der Innenschale 15 und der Aussenschale 17 kommen auf der gleichen Höhe zu liegen. Im Rahmenprofil dienen diese Nuten 21,22 zur Aufnahme von Isolierstegen 12. Die Isolierstege 12 werden jeweils in gegenüberliegenden Nuten 21,22 einer Innen- 15 und einer Aussenschale 17 angeordnet. Die Isolierstege 12 weisen an ihren beiden Enden eine Verbreiterung 18 auf, welche durch die Nut 21,22 an der Aussen- 17 oder Innenschale 15 aufgenommen werden kann. Dadurch ist eine formschlüssigen Verbindung zwischen dem Isoliersteg 12 und der Innen- 15 oder Aussenschale 17 realisiert.

Die Dicke des Isolierstegs 12 ist in etwa gleich gross wie die Wandstärke der Aussenseiten der Innen- 15 und Aussenschalen 17. Die Isolierstege 12 sind derart angeordnet, dass sie zueinander in paralleler aber spiegelverkehrter Ausrichtung zu stehen kommen. Die voneinander abgewandten Seiten der Isolierstege 12 bilden zugleich die Aussenseite des Rahmenprofils 13. An der Aussenseite der Isolierstege 12 sind Vorsprünge angebracht, welche denjenigen an der Innen- 15 und Aussenschale 17 gleichen. An der Innenseite des Isoliersteg 12 ist etwa in ihrer Mitte ein Querbalken 23 angeordnet, welcher senkrecht zur Verbindungslinie zwischen der Innen- 15 und Aussenschale 17 zu liegen kommt. Die Querbalken 23 beider Isolierstege 12 ragen von beiden Seiten soweit in die Mitte des Rahmenprofils 13, dass der Abstand zwischen ihnen etwa so gross wie die Dicke eines Isoliersteges 12 ist.

In Figur 2 ist ein Rahmenprofil 13 gezeigt, in welchem die Isolierstege 12 zwischen der Innenschale 15 und der Aussenschale 17 durch erfindungsgemässe Verbundprofile 11 gebildet sind. Die Innen- 15 und Aussenschale 17 weisen den gleichen Aufbau wie in Figur 1 auf. Die Verbundprofile 11 sind aus zwei unterschiedlichen Materialien zusammen gesetzt. Das erste Material bildet den Kern 25 des Verbundprofils 11. Dieses wird vorzugweise aus einem porösen Material gebildet. Der Kern 25 wird vollständig durch ein weiteres Material 27 ummantelt. Das zweite Material 27 nimmt zum Einen den Kern 25 auf und stellt zum Anderen die Verbindung des Verbundprofils 11 zu der Innen- 15 und Aussenschale 17 her. Für die Verbindung zur Innen- 15 bzw. Aussenschale 17 sind an seinen beiden Enden Einkerbungen 29 an beiden Flachseiten vorgenommen, so dass beide Enden des Verbundprofils 11 eine schwalbenschwanzförmige Gestalt 18 aufweisen. Diese schwalbenschwanzförmigen Enden 18 des Verbundprofils 11 ermöglichen eine formschlüssige Verbindung mit den an der Innen- 15 und Aussenschale 17 angebrachten Nuten 21 einzugehen. Vorzugsweise sind die Anformungen in die Nuten 21,22 eingerollt. Die Verbundprofile 11 sind wie bereits die Isolierstege 12 aus Figur 1 parallel zueinander gerichtet. Der Kern des Verbundprofils 25 weist einen rechteckigen Querschnitt auf, wobei die Länge ein Mehrfaches der Breite misst. Der Kern 25 ist auf seinen Flachseiten, welche die grössten Seiten des Kerns bilden, von einer dünnen Schicht 27 des zweiten Materials überdeckt. Diese Schicht 27 des zweiten Materials auf den Flachseiten des Kerns ist um ein Vielfaches dünner als die Dicke des Kerns 25. Die schwalbenschwanzförmigen Enden 18 des Verbundprofils 11 sind aus dem zweiten Material gebildet, so dass der Kern 25 in Richtung der Breite des Verbundprofils 11 sich nicht bis zu den schwalbenschwanzförmigen Enden ausbreitet. Die schwalbenschwanzförmige Gestalt an den zwei Enden des Verbundprofils wird durch je zwei auf gleicher Höhe, aber auf gegenüberliegenden Seiten des Verbundprofils angebrachten Kerben 29 erzielt.

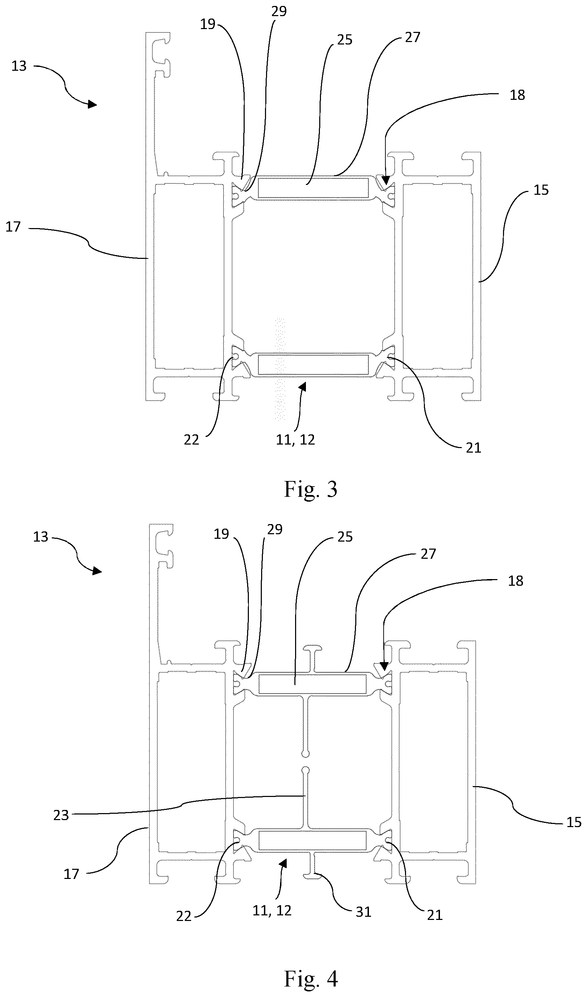

In Figur 3 ist ein Rahmenprofil 13 mit einem Verbundprofil 11 wie in Figur 2 dargestellt. Das Verbundprofil 11 weist jedoch in seinem Querschnitt eine andere Form auf. Die schwalbenschwanzförmigen Enden 18 des Verbundprofils 11 sind seitlich versetzt zur mittleren Ebene des Kerns 25 angeordnet. Als Ergebnis davon, kommen die voneinander abgewandten Seiten der Verbundprofile 11 mit einer am Rahmenprofil angebrachten Nut 21 bündig zu stehen.

Im Gegensatz zur in Figur 2 gezeigten Anordnung des Rahmenprofils 13 mit den Verbundprofilen 11 weisen die Verbundprofile in Figur 4 Querbalken 23 auf. Diese sind in der Mitte der zueinander zugewandten Seiten der Verbundprofile angebracht, so dass die Querbalken 23 senkrecht zur jeweiligen Flachseite des Verbundprofils 11 zu stehen kommen. Auf den voneinander abgewandten Flachseiten des Verbundprofils 11 ist je ein zusätzlicher Vorsprung 31 in etwa der Mitte beider Flachseiten angebracht. Dieser Vorsprung 31 weist eine T-Form auf und ragt soweit nach aussen, dass der Vorsprung 31 in etwa bündig mit den Vorsprüngen am Rahmenprofil 13 zu liegen kommt. Sowohl der Vorsprung 31 als auch der Querbalken 23 werden durch den zweiten Kunststoff 27, welche den Kern 25 ummantelt, gebildet.

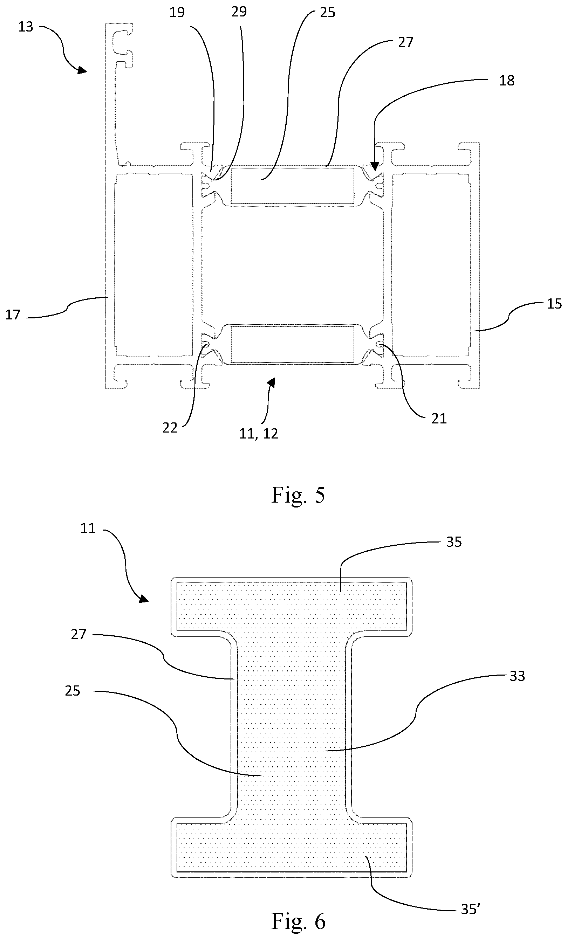

In Figur 5 ist die aus den vorherigen Figuren bekannte Anordnung des Rahmenprofils 13 gezeigt, wobei in dieser Ausführung die Verbundprofile 11 eine grössere Dicke aufweisen. Die grössere Dicke äussert sich im Querschnitt der Verbundprofile 11 durch eine grössere Breite. Die Änderung der Dicke des Verbundprofils 11 wird hauptsächlich durch die Verwendung eines dickeren Kerns 25 erreicht. Der zweite Kunststoff 27 weist dagegen eine geringe Vergrösserung seiner Dicke auf. Die Dicke der Verbundprofile 11 ist derart gewählt, dass die Flachseiten der Verbundprofile mit den Auswölbungen 19 am Rahmenprofil, welche die Nuten 21, 22 bilden, bündig zu stehen kommen.

In Figur 6 ist ein Querschnitt eines Doppel-T-Trägers gezeigt, welcher aus einem Verbundprofil 11 gebildet ist. Der Doppel-T-Träger besteht aus einem Steg 33 und zwei Flanschen 35, 35' , welche jeweils an einem Ende des Stegs 33 senkrecht zu diesem angebracht sind. Der Steg 33 weist eine grössere Dicke auf als die Flansche 35, 35'. Das Verhältnis der Dicke der Flansche gegenüber derjenigen des Stegs beträgt etwa 1 zu 2. Der aus einem porösen, insbesondere geschäumten Material hergestellte Kern 25 des Verbundprofils 11 bildet den Steg 33 und die Flansche 35, 35'. Der Kern 25 ist mit einer Schicht 27 aus einem Kunststoff umspritzt. Diese Schicht 27 weist überall um den Kern 25 im Wesentlichen die gleiche Wandstärke auf. Die Dicke der zweiten Schicht 27 ist im Vergleich zur Dicke des Stegs 33 oder der Flansche 35, 35' um ein Vielfaches, mindestens um ein Zehnfaches, kleiner. Die Kanten des Doppel-T-Träger sind abgerundet. Die Innenkanten des Kerns sind ebenfalls abgerundet, wogegen die Aussenkanten des Kerns rechtwinklig geformt sind.

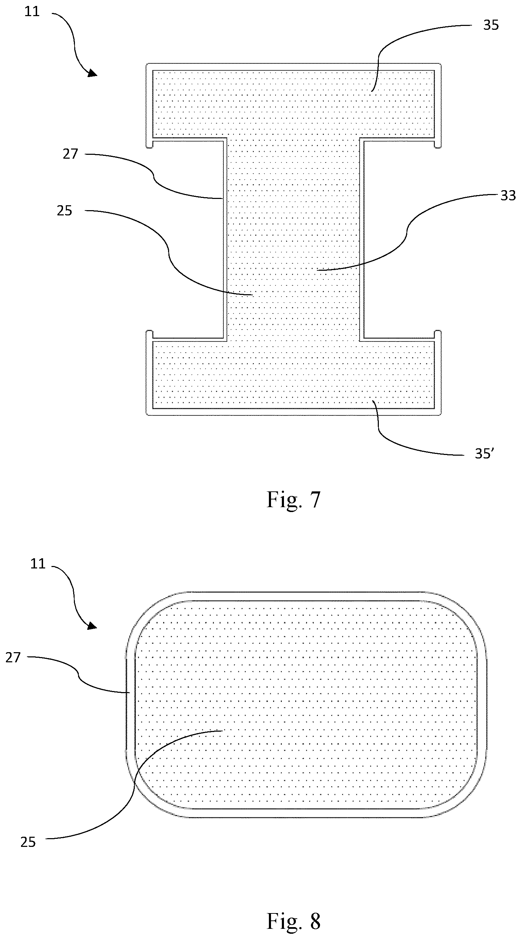

Figur 7 zeigt einen Doppel-T-Träger, welcher ähnliche Dimensionen wie derjenige aus Figur 6 aufweist. Hier sind ebenfalls der Steg 33 und die Flansche 35, 35' durch einen porösen Kunststoff gebildet, welcher den Kern 25 des Verbundprofils 11 bildet. Im Gegensatz zum Kern aus Figur 6 weist der Kern 25 in Figur 7 lediglich rechtwinklige Kanten auf. Der Kern 25 ist wie der Träger aus Figur 6 von einer Kunststoff-Schicht 27 umgeben. Die Kunststoff-Schicht 27 weist auf den nach aussen gerichteten Flächen des Kerns 25 eine grössere Wandstärke auf als auf den nach innen gerichteten Flächen des Kerns 25. Dies ist eine Möglichkeit den mit Glasfasern versetzten zweiten Kunststoff, welche die den Kern 25 umgebende Schicht 27 bildet, den erwarteten Belastungen im Bauteil entsprechend einzusetzen. In dieser Ausführung wird erwartet, dass an jenen Stellen, wo die Kunststoff-Schicht dicker ist, grössere Kräfte auftreten werden. An den Schnittstellen der dünneren mit der dickeren Kunststoff-Schicht, überragt die dickere Schicht jeweils die Schnittstelle.

Figur 8 zeigt ein Verbundprofil 11, welches einen rechteckigen Querschnitt mit abgerundeten Kanten aufweist. Die Form des Verbundprofils 11 wird ihm durch den Kern 25 gegeben. Die auf den Kern 25 angebrachte Kunststoffschicht 27 weist eine konstante Dicke auf und führt somit dazu, dass die Form des Verbundprofils 11 vom Kern 25 bestimmt wird. In dieser Ausführung kann die Dicke des Verbundprofils als die Breite des rechteckigen Querschnitts gesehen werden.

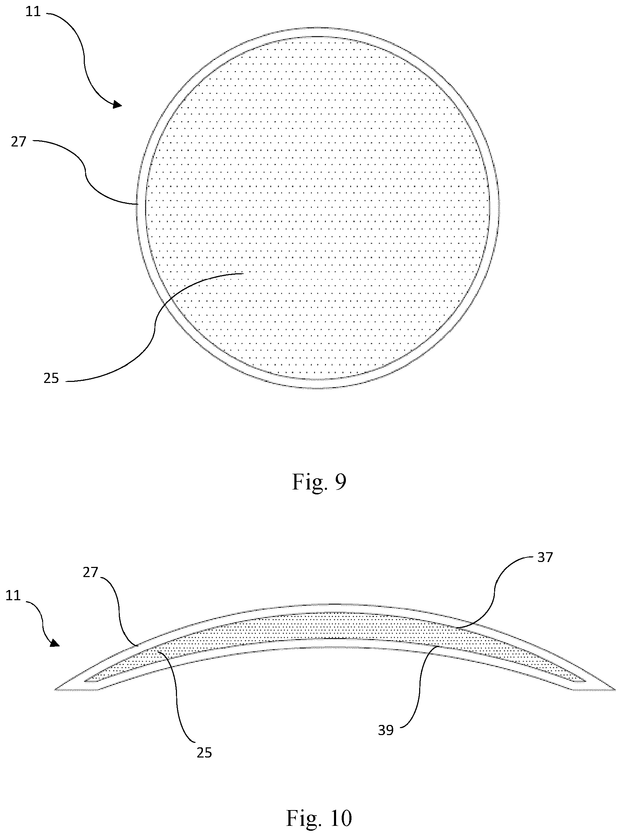

Die Figur 9 zeigt ein Verbundprofil 11 mit einem kreisrunden Querschnitt. Der Kern 25 ist durch eine runde Stange gebildet. Die Mantelfläche des Kerns wird von einer zweiten Schicht 27 umfasst. Die Dicke der zweiten Schicht 27 ist über den ganzen Umlauf des Querschnitts konstant. In dieser Ausführung kann der Durchmesser des kreisrunden Querschnitts als Dicke aufgefasst werden.

Der Kern 25 des in Figur 10 gezeigten Verbundprofils 11 umfasst zwei gebogene Flachseiten und diese zwei Flachseiten verbindende Breitseiten. Die zwei gebogenen Flachseiten sind auf die gleiche Seite gekrümmt. Die Krümmung der Oberseite 37 ist stärker als diejenige der Unterseite 39. Dadurch stellt sich eine variierende Dicke in Breitenrichtung des Profils 11 ein. Die grösste Dicke weist der Kern 25 in seiner Mitte auf. Die Breitseiten sind derart ausgerichtet, dass sie in etwa parallel zueinander verlaufen. Der Kern ist von einer Kunststoff-Schicht 27 umgeben. Die Kunststoff-Schicht 27 weist auf beiden Flachseiten die gleiche Wandstärke auf. An den Ecken des Kerns 25 ist die Dicke der zweiten Schicht erhöht, so dass die Kanten des Verbundprofils nicht abgerundet sondern gewinkelt sind.

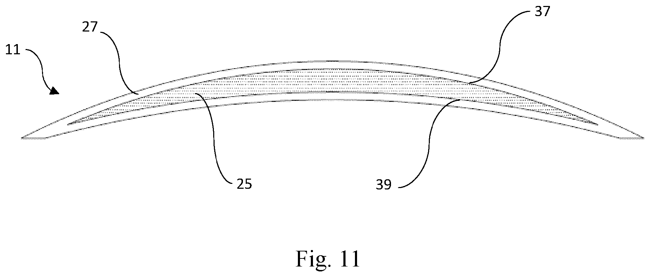

In Figur 11 ist ein Verbundprofil ähnlich demjenigen aus Figur 10 gezeigt. Das Verbundprofil in Figur 11 unterscheidet sich von dem aus Figur 10 dadurch, dass die Oberseite 37 und Unterseite 39 nicht durch zwei Seiten verbunden sind, sondern zwei gemeinsame Kanten teilen. Diese zwei Kanten sind die einzigen Kanten des Kerns. Auch in dieser Ausführung weist die Oberseite 37 eine stärkere Krümmung auf als die Unterseite 39, so dass der Kern 25 die grösste Dicke in seiner Mitte aufweist. Der Kern 25 ist von einer Kunststoff-Schicht 27 umgeben, die auf beiden Flachseiten die gleiche Dicke aufweist. An den Kanten des Kerns 25 ist die Kunststoff-Schicht 27 derart angeordnet, dass eine spitzwinklige Kante zu stehen kommt.

Im Folgenden ist ein bevorzugtes Herstellungsverfahren eines erfindungsgemässen Verbundprofils beschrieben:
Der erste Kunststoff wird in einer geschäumten Form vorgelegt. Der erste Kunststoff kann bei dessen Herstellung bereits in der gewünschten Gestalt hergestellt werden. Andernfalls muss der Kunststoff nachbearbeitet werden, dass er die Gestalt des Kerns des zu bildenden Verbundprofils aufweist. Der zweite Kunststoff wird in einem Extrusions-Verfahren um den ersten Kunststoff, welcher den Kern bildet, aufgetragen. In einer geeigneten Extrusionsvorrichtung bewegt sich der der Kern bei der Herstellung mit konstanter Geschwindigkeit durch die Düse der Extrusionsvorrichtung und wird dabei bis auf die vordere und hintere Stirnseite des Profils umspritzt. Durch das Extrusions-Verfahren kann die Temperatur des zweiten Kunststoffs und die Geschwindigkeit des ersten Kunststoffs derart gewählt werden, dass der erste Kunststoff an der Oberfläche aufgeschmolzen wird und sich eine stoffschlüssige Verbindung zwischen den beiden Kunststoffen einstellt ohne eine plastische Deformation am ersten Kunststoff vorzunehmen. Zugleich lässt sich auf diese Weise eine grössere Herstellgeschwindigkeit gegenüber den gängigen Herstellverfahren erreichen.

Vorstellbar ist auch, dass ein erfindungsgemässes Verbindungsprofil in einem Pultrusionsverfahren, idealerweise mit Verwendung von glasfaserversetztem Epoxidharz, oder einem ähnlichen Verfahren, wie zum Beispiel Doppelbandpressen, hergestellt wird.

Während vorstehend spezifische Ausführungsformen beschrieben wurden, ist es offensichtlich, dass unterschiedliche Kombinationen der aufgezeigten Ausführungsmöglichkeiten angewendet werden können, insoweit sich die Ausführungsmöglichkeiten nicht gegenseitig ausschliessen.

Während die Erfindung vorstehend unter Bezugnahme auf spezifische Ausführungsformen beschrieben wurde, ist es offensichtlich, dass Änderungen, Modifikationen, Variationen und Kombinationen ohne vom Erfindungsgedanken abzuweichen gemacht werden können.

### BEZUGSZEICHENLISTE:

- 11: Verbundprofil
- 12: Isoliersteg
- 13: Rahmenprofil
- 15: Inneschale
- 17: Aussenschale
- 18: Anformung / Verbreiterung
- 19: Auswölbung
- 21: Nut an der Innenschale
- 22: Nut an der Aussenschale
- 23: Querbalken
- 25: Kern des Verbundprofils
- 27: Umhüllung des Kerns
- 29: Kerbe
- 31: Vorsprung am Verbundprofil
- 33: Steg
- 35, 35': Flansch
- 37: Oberseite des Kerns
- 39: Unterseite des Kerns

## Patentansprüche

1. Verbundprofil (11) mit
einem geschäumten Kern (25) aus einem ersten Kunststoff und einer den Kern (25) umfassenden Umhüllung (27) aus einem zweiten Kunststoff, die den Kern (25) formschlüssig umhüllt,
wobei der erste und der zweite Kunststoff miteinander kompatibel sind, d.h. eine stoffschlüssige Verbindung miteinander eingehen können
**dadurch gekennzeichnet,**
**dass** der erste Kunststoff (25) PET umfasst.

2. Verbundprofil (11) nach Anspruch 1, **dadurch gekennzeichnet, dass** an gegenüberliegenden Seiten des Verbundprofils (11) stirnseitig eine Anformung (18) vorgesehen ist, um eine form-, kraft- und/oder stoffschlüssige Verbindung, vorzugweise jedoch eine formschlüssige Verbindung, mit anderen Teilen einzugehen.

3. Verbundprofil (11) nach Anspruch 2, **dadurch gekennzeichnet, dass** die Anformungen (18) an Längsseiten des Verbundprofils (11) angeordnet sind.

4. Verbundprofil (11) nach einem der Ansprüche 1 bis 3, **dadurch gekennzeichnet, dass** die Anformung (18) aus dem zweiten Kunststoff an gegenüberliegenden Seiten des Verbundprofils (11) in Gestalt eines schwalbenschwanzförmigen Fortsatzes, einer Einkerbung (29) oder dergleichen vorgesehen ist.

5. Verbundprofil (11) nach einem der Ansprüche 1 bis 4, **dadurch gekennzeichnet, dass** der zweite Kunststoff (27) die Mantelfläche des geschäumten Kerns (25) umhüllt.

6. Verbundprofil (11) nach einem der Ansprüche 1 bis 5, **dadurch gekennzeichnet, dass** das Verbundprofil (11) eine Dicke von maximal 40 mm, vorzugsweise von 25 mm aufweist.

7. Verbundprofil (11) nach einem der Ansprüche 1 bis 6, **dadurch gekennzeichnet, dass** der zweite Kunststoff (27) mit Glaskurzfasern versetzt ist.

8. Verbundprofil (11) nach Anspruch 7, **dadurch gekennzeichnet, dass** der Anteil an Glaskurzfasern im zweiten Kunststoff (27) 10% bis 40%, vorzugsweise 20% bis 30% beträgt.

9. Verbundprofil (11) nach einem der Ansprüche 1 bis 8, **dadurch gekennzeichnet, dass** der erste Kunststoff (25) eine Dichte von 120 bis 450 kg/m3, vorzugsweise von 150 bis 350 kg/m3 und noch bevorzugter von 170 bis 300 kg /m3 aufweist.

10. Verbundprofil (11) nach einem der Ansprüche 1 bis 9, **dadurch gekennzeichnet, dass** der zweite Kunststoff (27) PET oder PBT umfasst.

11. Verbundprofil (11) nach einem der Ansprüche 1 bis 10, **dadurch gekennzeichnet, dass** die Breite des Verbundprofils mindestens ein Vierfaches, vorzugsweise mindestens ein Sechsfaches der Dicke des Verbundprofils beträgt.

12. Verbundprofil (11) nach einem der Ansprüche 1 bis 11, **dadurch gekennzeichnet, dass** der geschäumte Kern (25) einen Querschnitt in Form eines flachen Rechtecks aufweist und der zweite Kunststoff (27) auf den Flachseiten des Kerns eine Dicke zwischen 0.1 mm bis 5 mm, vozugsweise zwischen 0.1 mm bis 2 mm besonders bevorzugt zwischen 0.1 mm und 1 mm, aufweist.

13. Rahmenprofil oder Flügelprofil (13) für Fenster oder Türen mit einem Verbundprofil (11) gemäss einem der Ansprüche 1 bis 12.

14. Rahmenprofil oder Flügelprofil (13) nach Anspruch 13, **dadurch gekennzeichnet, dass** das Verbundprofil (11) zwischen einer Aussenschale (17) und einer Innenschale (15) des Fensters oder der Türe angeordnet ist und vorzugsweise eine formschlüssige Verbindung mit der Aussen- (17) und Innenschale (15) des Fensters oder der Türe eingeht.

15. Rahmenprofil oder Flügelprofil (13) nach einem der Ansprüche 13 bis 14, **dadurch gekennzeichnet, dass** die Anformungen (18) im Verbundprofil (11) eine formschlüssige Verbindung mit der Aussen- (17) und Innenschale (15) des Fensters oder der Türe eingehen.

16. Verfahren zur Herstellung eines Verbundprofils (11), bei welchem ein Kern (25) durch ein PET-Hartschaum gebildet ist und dieser Kern (25) mit einem faserverstärkten Kunststoff aus PET oder PBT umspritzt wird,
**dadurch gekennzeichnet,**
**dass** das Umspritzen des Kerns (25) mit dem faserverstärkten Kunststoff in einem Extrusions-Verfahren durchgeführt wird.

17. Verfahren gemäss Anspruch 16, **dadurch gekennzeichnet, dass** beim Umspritzen des Kerns (25) durch den faserverstärkten Kunststoff eine stoffschlüssige Verbindung zwischen diesen Kunststoffen zustande kommt.

18. Verfahren gemäss Anspruch 16 oder 17, **dadurch gekennzeichnet, dass** das Verbundprofil (11) nach dessen Herstellung eloxiert, pulverlackiert oder nasslackiert wird.

## Claims

1. A composite profile (11) comprising a foamed core (25) made of a first plastic and an envelope (27) made of a second plastic enclosing the core (25), which envelops the core (25) in a form-fitting manner,
wherein the first and the second plastic are compatible with one another, i.e. can enter into an integrally bonded connection with one another.
**characterised in that**
the first plastic (25) comprises PET.

2. The composite profile (11) according to claim 1, **characterised in that** a moulding (18) is provided at the end face on opposite sides of the composite profile (11), in order to enter into a form-fitting, force-fitting and/or integrally bonded connection, but preferably a form-fitting connection, with other parts.

3. The profile (11) according to claim 2, **characterised in that** the mouldings (18) are arranged on longitudinal sides of the composite profile (11).

4. The composite profile (11) according to any one of claims 1 to 3, **characterised in that** the moulding (18) from the second plastic is provided on opposite sides of the composite profile (11) in the form of a dovetail-shaped extension, a notch (29) or suchlike.

5. The composite profile (11) according to any one of claims 1 to 4, **characterised in that** the second plastic (27) encloses the lateral surface of the foamed core (25) .

6. The composite profile (11) according to any one of claims 1 to 5, **characterised in that** the composite profile (11) has a thickness of at most 40 mm, preferably of 25 mm.

7. The composite profile (11) according to any one of claims 1 to 6, **characterised in that** the second plastic (27) is mixed with short glass fibres.

8. The composite profile (11) according to claim 7, **characterised in that** the proportion of short glass fibres in the second plastic (27) is 10 % to 40 %, preferably 20 % to 30 %.

9. The composite profile (11) according to any one of claims 1 to 8, **characterised in that** the first plastic (25) has a density of 120 to 450 kg/m³, preferably of 150 to 350 kg/m3 and more preferably of 170 to 300 kg/m³.

10. The composite profile (11) according to any one of claims 1 to 9, **characterised in that** the second plastic (27) comprises PET or PET.

11. The composite profile (11) according to any one of claims 1 to 10, **characterised in that** the width of the composite profile is at least a four-fold, preferably at least a six-fold thickness of the composite profile.

12. The composite profile (11) according to any one of claims 1 to 11, **characterised in that** the foamed core (25) has a cross-section in the form of a flat rectangle and the second plastic (27) on the flat sides of the core has a thickness between 0.1 mm and 5 mm, preferably between 0.1 mm and 2 mm, particularly preferably between 0.1 mm and 1 mm.

13. A frame profile or wing profile (13) for windows or doors with a composite profile (11) according to any one of claims 1 to 12.

14. The frame profile or wing profile (13) according to claim 13, **characterised in that** the composite profile (11) is arranged between an outer shell (17) and an inner shell (15) of the window or of the door and preferably enters into a form-fitting connection with the outer shell (17) and inner shell (15) of the window or the door.

15. Frame profile or wing profile (13) according to any one of claims 13 to 14, **characterised in that** the mouldings (18) in the composite profile (11) enter into a form-fitting connection with the outer shell (17) and inner shell (15) of the window or the door.

16. A method for producing a composite profile (11), in which a core (25) is formed by a PET rigid foam and this core (25) is encapsulated with a fibre-reinforced plastic from PET or PBT,
**characterised in that**
the encapsulation of the core (25) with the fibre-reinforced plastic is carried out in an extrusion process.

17. The method according to claim 16, **characterised in that**, when the core (25) is encapsulated by the fibre reinforced plastic, an integrally bonded connection is brought about between these plastics.

18. The method according to claim 16 or 17, **characterised in that** the composite profile (11), after the production thereof, is anodised, powder-painted or wet-painted.

## Revendications

1. Profilé composite (11), doté
d'un noyau (25) expansé en une première matière plastique et d'une enveloppe (27) en une deuxième matière plastique, incluant le noyau (25), qui enveloppe le noyau (25) par complémentarité de forme, la première et la deuxième matières plastiques étant compatibles l'une avec l'autre, c'est-à-dire pouvant créer ensemble une liaison par conjugaison de matières,
**caractérisé**
**en ce que** la première matière plastique (25) comprend du PET.

2. Profilé composite (11) selon la revendication 1, **caractérisé en ce que** sur des côtés opposés du profilé composite (11) est prévu en face frontale un appendice (18), pour créer une liaison par complémentarité de forme, de force et / ou par conjugaison de matières, de préférence pour créer avec d'autres pièces une liaison par complémentarité de forme.

3. Profilé composite (11) selon la revendication 2, **caractérisé en ce que** les appendices (18) sont placés sur des côtés longitudinaux du profilé composite (11).

4. Profilé composite (11) selon l'une quelconque des revendications 1 à 3, **caractérisé en ce que** l'appendice (18) est prévu dans la deuxième matière plastique sur des côtés opposés du profilé composite (11), sous la forme d'un prolongement en queue d'aronde, d'une encoche (29) ou analogues.

5. Profilé composite (11) selon l'une quelconque des revendications 1 à 4, **caractérisé en ce que** la deuxième matière plastique (27) enveloppe la surface enveloppante du noyau (25) expansé.

6. Profilé composite (11) selon l'une quelconque des revendications 1 à 5, **caractérisé en ce que** le profilé composite (11) présente une épaisseur d'un maximum de 40 mm, de préférence de 25 mm.

7. Profilé composite (11) selon l'une quelconque des revendications 1 à 6, **caractérisé en ce que** la deuxième matière plastique (27) est mélangée à des fibres de verre courtes.

8. Profilé composite (11) selon la revendication 7, **caractérisé en ce que** la part de fibres de verre courtes dans la deuxième matière plastique (27) s'élève à de 10 % à 40 %, de préférence à de 20 % à 30 %.

9. Profilé composite (11) selon l'une quelconque des revendications 1 à 8, **caractérisé en ce que** la première matière plastique (25) fait preuve d'une densité de 120 à 450 kg/m³, de préférence de 150 à 350 kg/m³ et de manière encore plus préférentielle, de 170 à 300 kg/m³.

10. Profilé composite (11) selon l'une quelconque des revendications 1 à 9, **caractérisé en ce que** la deuxième matière plastique (27) comprend du PET ou du PBT.

11. Profilé composite (11) selon l'une quelconque des revendications 1 à 10, **caractérisé en ce que** la largeur du profilé composite s'élève à au moins un quadruple, de préférence à au moins un sextuple de l'épaisseur du profilé composite.

12. Profilé composite (11) selon l'une quelconque des revendications 1 à 11, **caractérisé en ce que** le noyau (25) expansé comporte une section transversale sous la forme d'un rectangle plat et la deuxième matière plastique (27) présente sur les côtés plats du noyau une épaisseur comprise entre de 0.1 mm à 5 mm, de préférence entre de 0.1 mm à 2 mm, de manière particulièrement préférentielle entre de 0.1 mm et 1 mm.

13. Profilé d'encadrement ou profilé de vantail (13) destiné à des fenêtres ou à des portes, doté d'un profilé composite (11) selon l'une quelconque des revendications 1 à 12.

14. Profilé d'encadrement ou profilé de vantail (13) selon la revendication 13, **caractérisé en ce que** le profilé composite (11) est placé entre une coque extérieure (17) et une coque intérieure (15) de la fenêtre ou de la porte et créé de préférence une liaison par complémentarité de forme avec la coque extérieure (17) et la coque intérieure (15) de la fenêtre ou de la porte.

15. Profilé d'encadrement ou profilé de vantail (13) selon l'une quelconque des revendications 13 à 14, **caractérisé en ce que** les appendices (18) créent dans le profilé composite (11) une liaison par complémentarité de forme avec la coque extérieure (17) et la coque intérieure (15) de la fenêtre ou de la porte.

16. Procédé, destiné à fabriquer un profilé composite (11), lors duquel l'on constitue un noyau (25) à l'aide d'une mousse dure en PET et l'on surmoule ledit noyau (25) d'une matière plastique en PET ou en PBT renforcée par fibres,
**caractérisé**
**en ce que** l'on procède au surmoulage du noyau (25) avec la matière plastique renforcée par fibres par un procédé d'extrusion.

17. Procédé selon la revendication 16, **caractérisé en ce que** lors du surmoulage du noyau (25) avec la matière plastique renforcée par fibres, une liaison par conjugaison de matière s'établit entre lesdites matières plastiques.

18. Procédé selon la revendication 16 ou 17, **caractérisé en ce qu'**après sa fabrication, l'on anodise, l'on laque à la poudre ou l'on met en peinture humide le profilé composite (11).
